# EUROPEAN PATENT APPLICATION

(11) **EP 2 772 998 A2**
(43) Date of publication of application: **03.09.2014**
(21) Application number: 14156952.5
(22) Date of filing: 27.02.2014
(51) Int. Cl.: H02G 3/08

(54) **Electrical connection box**

(30) Priority: 01.03.2013 JP 2013041244
(71) Applicant: Sumitomo Wiring Systems, Ltd., Yokkaichi Mie 510-8503 (JP); Suzuki Motor Corporation, Hamamatsu Shizuoka 432-8611 (JP)
(72) Inventor: Inamasu, Kazuya, Yokkaichi, Mie 510-8503 (JP); Kori, Yoshinori, Hamamatsu, Shizuoka 432-8611 (JP)
(74) Representative: Horn Kleimann Waitzhofer

(57) **Abstract**

According to one embodiment, an electrical connection box includes: a box body to be fixed to a vehicle body panel; a bracket provided above the box body, including: a mounting portion extending upwardly from the bracket, the mounting portion configured to mount the box body onto the vehicle body panel; a water catch recess surrounded by walls in all directions and opened vertically upward, the water catch recess provided on a base end portion of the mounting portion; a water discharge hole formed with a rear wall of the walls, the rear wall being situated on a side corresponding to the vehicle body panel and being extended upward to form the mounting portion; and an eaves portion projecting from the water discharge hole toward the vehicle body panel continuously with the bottom surface of the water catch recess, the eaves portion being provided on a side surface of the bracket, which is corresponding to the vehicle body panel, and the eaves portion being situated nearer to the vehicle body panel than the box body.

## Description

### BACKGROUND

### 1. Field of the Invention

The invention relates to an electrical connection box to be mounted on vehicles such as automobiles and, specifically, it relates to an electrical connection box to be mounted onto a vehicle body panel through a bracket arranged above a box body.

### 2. Description of the Related Art

Conventionally, a vehicle such as an automobile mounts thereon an electrical connection box such as a junction box and a relay box. Such electrical connection box is mounted on a vehicle body panel through a bracket provided integrally or separately on a box body.

Here, the bracket to be provided for the electrical connection box is disposed at various positions of the box body according to the arrangement position of the electrical connection box within the vehicle body and the shape of the vehicle body panel. For example, JP-A-2011-152846 discloses an electrical connection box with a bracket arranged above its box body.

However, in the electrical connection box with the bracket arranged above the box body, there is a fear that water having entered inside the vehicle body due to rain or high-pressure cleaning can flow from the vehicle body panel to the bracket and thus happen to flow onto the box body. Especially, when the box body is covered with water from above, the distance of the water flowing on the box body is long, which raises a fear that the water can intrude into the box body or can touch electrical parts such as a relay and a fuse mounted on the surface of the box body.

Thus, JP-A-2011-152846 proposes a structure that, in the bracket, there is formed a step portion lowered one stage from the upper surface of the box body and water is discharged from the step portion. However, in this structure, there is a fear that, due to the vibrations of the vehicle or the like, the water can flow beyond the step portion and invade into the box body. Also, since the water guided to the step portion is discharged laterally of the box body, there is a fear that the water after dropping down from the step portion can flow again onto the electrical connection box. Thus, the structure needs to be improved further.

### SUMMARY

The invention is made in view of the above circumstances. Thus, in an electrical connection box with a bracket provided above its box body, it is an object of the invention to provide an electrical connection box having a new structure which can more effectively prevent the box body from being touched by water flowing on the bracket.

According to a first embodiment of the invention, in an electrical connection box comprising a box body to be fixed to a vehicle body panel through a bracket provided above the box body, the bracket includes a mounting portion extending upwardly therefrom for mounting the box body onto the vehicle body panel, the mounting portion includes on the base end thereof a water catch recess surrounded by walls in all directions and opened vertically upward, the rear wall of such walls situated on the vehicle body panel side is extended upward to thereby form the mounting portion, the rear wall includes a water discharge hole penetrating therethrough, and the bracket also includes on the vehicle body panel side surface thereof an eaves portion projecting from the water discharge hole toward the vehicle body panel continuously with the bottom surface of the water catch recess, while the eaves portion is situated nearer to the vehicle body panel than the box body.

In this invention, the water catch recess is formed in the base end of the bracket's mounting portion for mounting the box body onto the vehicle body panel, while the mounting portion is formed by such wall of the water catch recess as exists on the vehicle body panel side. Thus, water having flowed from the vehicle body panel to the mounting portion can be caught by the water catch recess. And, since the water caught by the water catch recess is discharged through the water discharge hole, the water on the vehicle body panel can be prevented from moving to the box body through the bracket.

Also, since the eaves portion is formed on the water discharge hole, the drop position of the water discharged from the water discharge hole can be kept away further from the box body. This can reduce a fear that the water dropping after discharged from the water discharge hole can flow to the box body.

Further, since the water discharge hole is opened on the vehicle body panel side and the eaves portion is projected toward the vehicle body panel, the water flowing on the bracket is discharged toward the vehicle body panel opposite to the box body. This can prevent the water from flowing to the box body more effectively and also enables the discharged water to flow to the vehicle body panel, thereby being able to reduce a fear that the discharged water can scatter around and touch the box body.

According to a second embodiment of the invention, in the electrical connection box of the first embodiment, a reinforcing rib for connecting the rear wall and bottom surface of the water catch recess to each other is provided on the water discharge hole.

In this embodiment, since the reinforcing rib is formed in the water discharge hole forming portion, the water discharge hole can be formed without impairing the rigidity of the bracket.

According to a third embodiment of the invention, in the electrical connection box according of the first or second embodiment, a clamp mounting portion is formed using the front wall of the water catch recess.

A clamp for holding a wire harness is fixed by inserting it into the electrical connection box, vehicle body panel or the like. Therefore, a clamp mounting portion requires a depth dimension capable of inserting the insertion portion of the clamp therein. Thus, when the insertion depth of the insertion portion of the clamp is secured using the height of the wall of the water catch recess, the clamp mounting portion can be formed in the bracket with high space efficiency.

According to a fourth embodiment of the invention, in the electrical connection box of any one of the first to third embodiments, a scattering prevention wall is formed in each of the two width-direction end edges of the eaves portion.

In this embodiment, the scattering prevention wall can prevent the water flowing on the eaves portion from being discharged in the width direction of the eaves portion. This enables the water discharged from the water discharge hole to flow to the projection end edge of the eaves portion positively, thereby being able to discharge the water to the vehicle body panel side positively.

According to a fifth embodiment of the invention, in the electrical connection box of any one of the first to fourth embodiments, of the walls of the water catch recess, a pair of side walls connected to the rear wall are extended to the upper end edge of the mounting portion.

In this embodiment, at and from the time when water reaches the upper end edge of the mounting portion, the pair of side walls prevent the water from flowing outside the mounting portion, whereby the water can be guided to the water catch recess. Thus, the water reaching the bracket can be caught by the water catch recess more positively.

According to a sixth embodiment of the invention, in the electrical connection box of any one of the first to fifth embodiments, the box body includes on the vehicle body panel side surface thereof a short part mounting portion for mounting thereon a short part having a relatively small dimension of projection from the box body and a tall part mounting portion for mounting thereon a tall part having a relatively large dimension of projection from the box body, and the eaves portion, when the box body is mounted on the vehicle body panel, is disposed shifted at least from the vertically upward direction of the tall part mounting portion.

In this embodiment, there can be reduced a fear that water dropping from the eaves portion can flow onto electrical parts mounted on the box body. This can further reduce a fear that the water can flow onto the box body. Here, the expression "the short and tall parts" is used to represent various electric parts to be mounted on the box body, for example, a relay, a fuse and a connector.

In this invention, in the base end of the mounting portion of the bracket disposed above the box body for mounting the box body onto the vehicle body panel, there is formed the water catch recess surrounded by walls in all directions. Thus, since the water having flowed from the vehicle body panel to the mounting portion is caught by the water catch recess and is thereby prevented against scattering, the box body can be prevented from being touched by the water. And, the water discharge hole is formed in such rear wall of the water catch recess as exists on the vehicle body panel side and thus water caught by the water catch recess is discharged toward the vehicle body panel opposite to the box body. Also, the eaves portion is formed in the water discharge hole to retreat the discharge position of the water further toward the vehicle body panel from the box body, thereby being able to prevent water from flowing to the box body more effectively.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:
Fig. 1 is a plan view of an electrical connection box according to an embodiment of the invention;
Fig. 2 is a section view taken along the II-II line in Fig. 1;
Fig. 3 is an enlarged view of the main portion of the electrical connection box shown in Fig. 1, on the opposite side to a vehicle body panel; and
Fig. 4 is an enlarged view of the main portion of the electrical connection box shown in Fig. 1, on the vehicle body panel side.

### DETAILED DESCRIPTION OF THE INVENTION

Now, description is given of an embodiment of the invention with reference to the accompanying drawings.

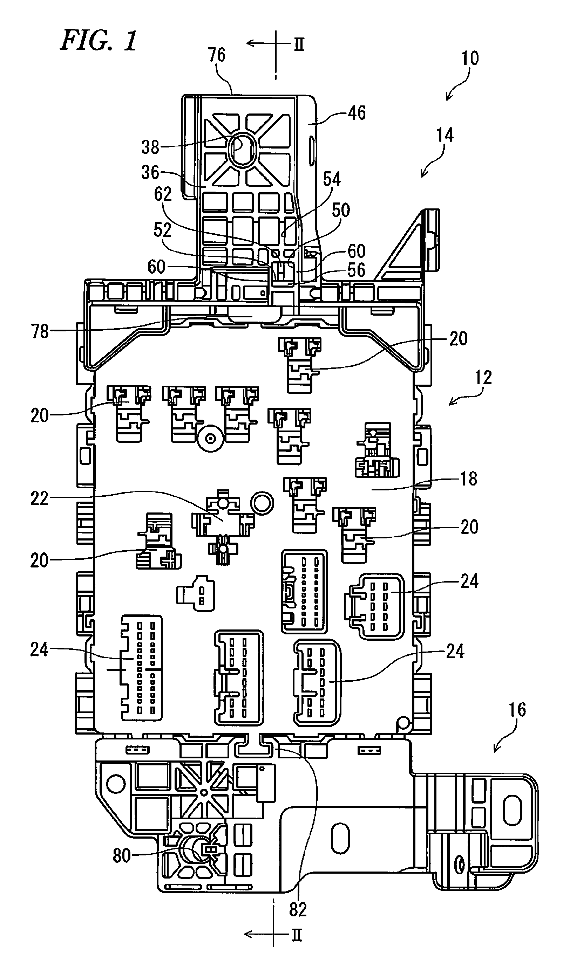

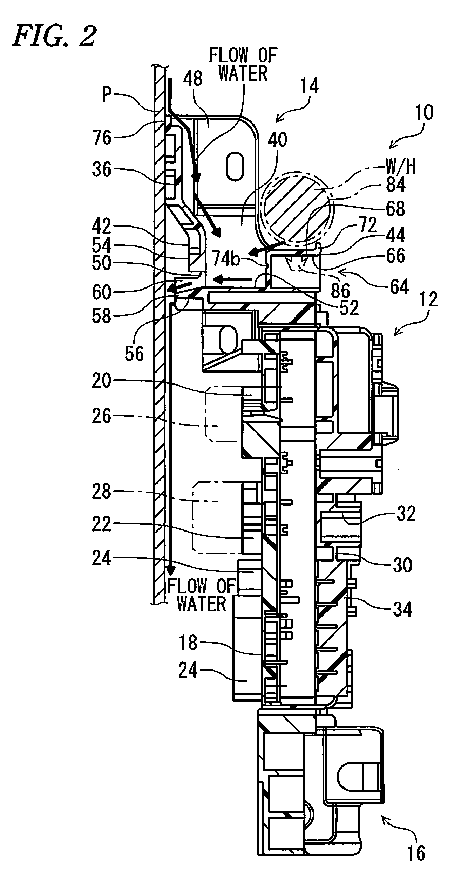

Firstly, Figs. 1 and 2 show an electrical connection box 10 according to an embodiment of the invention. In the following description, the expression "vertical direction" means "the perpendicularly vertical direction of the electrical connection box 10" in a state where it is mounted on a vehicle body, specifically, "the vertical direction" in Fig. 1. The electrical connection box 10 has a structure that an upper bracket 14 serving as a bracket specified in the claims is mounted above a box body 12 and a lower bracket 16 is mounted below the box body 12. As shown in Fig. 2, the electrical connection box 10 is to be fixed through the upper and lower brackets 14 and 16 to a vehicle body panel P (in Fig. 2, there is shown only the vehicle body panel to which the upper bracket 14 is to be fixed) interposed between the engine room and vehicle room of a vehicle, and is to be mounted on the vehicle room side (in Fig. 2, the right side) of the vehicle body panel P.

The box body 12 has a substantially rectangular box shape. As shown in Fig. 1, the box body 12 includes, on its surface 18 disposed on the vehicle body panel P side when it is mounted on the vehicle body, multiple small-size relay mounting portions 20 serving as short part mounting portions, large-size connector mounting portions 22 serving as tall part mounting portions 22, and multiple connector mounting portions 24. As shown in Fig. 2, a small-size relay 26 serving as a short part is mounted on each small-size relay mounting portion 20, while a large-size relay 28 serving as a tall part is mounted on each large-size relay mounting portion 22. The large-size relay 28 is larger in size than the small-size relay 26 and, in a state where the large-size relay 28 is mounted on the large-size relay mounting portion 22, it is projected toward the vehicle body panel P further than the small-size relay 26. Also, although not shown specifically, the box body 12 includes, on its surface 30 on the opposite side to the vehicle body panel P, multiple connector mounting portions 32, fuse mounting portions 34 and the like.

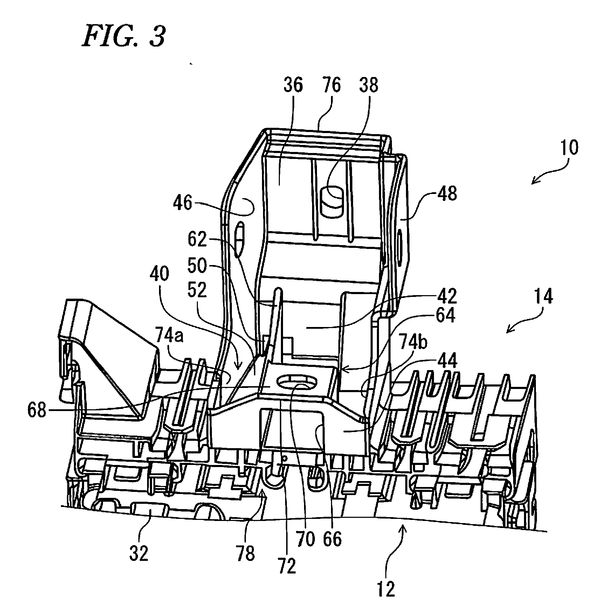

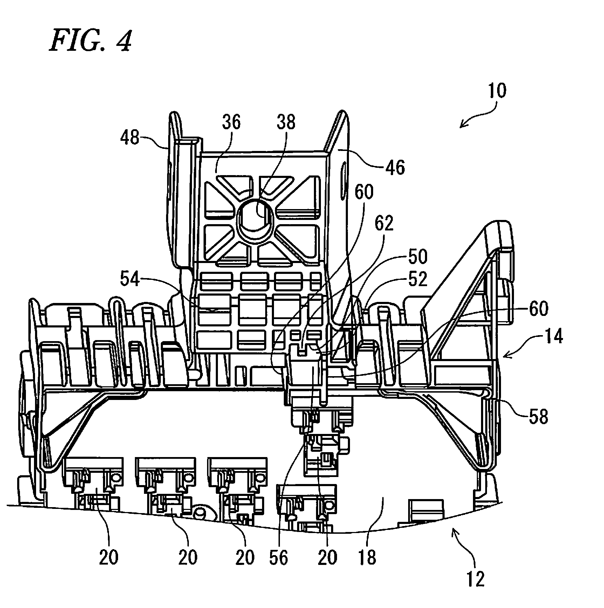

Above the box body 12, there is mounted the upper bracket 14. The upper bracket 14 is formed separately from the box body 12 and is an integrally molded synthetic-resin member. As shown in Figs. 3 and 4, the upper bracket 14 includes an upwardly extending mounting portion 36. The mounting portion 36 has an upper end disposed to project toward the vehicle body panel P, while a bolt insertion hole 38 is formed in the upper end of the mounting portion 36 to penetrate therethrough.

The upper bracket 14 includes a water catch recess 40 formed in the base end of the mounting portion 36. The water catch recess 40 has an upwardly opened bottomed concave shape surrounded by four upwardly projecting walls in all directions, that is, a rear wall 42 situated on the vehicle body panel P side, a front wall 44 opposed to the rear wall section 42, and a pair of side walls 46, 48 respectively connected to the rear and front wall 42 and 44. And, to form the mounting portion 36, the rear wall 42 may be extended upward.

The rear wall 42 includes a water discharge hole 50 which penetrates therethrough. The water discharge hole 50 is formed in the end of the rear wall 42 existing on the bottom surface 52 side of the water catch recess 40. Thus, the water catch recess 40 is opened, through the water discharge hole 50, in the surface 54 of the upper bracket 14 existing on the vehicle body panel P side. As can be seen clearly from Fig. 3 and the like, especially, the water discharge hole 50 of this embodiment is formed to shift horizontally (in Fig. 1, in the right and left direction) from the center of the water catch recess 40 and is situated shifted from the vertically upward direction (in Fig. 1, the upward direction) of the large-size relay mounting portion 22 of the box body 12.

The water discharge hole 50 includes, on the surface 54 side thereof, an eaves portion 56 projected from the surface 54 toward the vehicle body panel P. As shown in Fig. 2, the eaves portion 56 continues with the bottom surface 52 of the water catch recess 40 and has a slope shape which is inclined downward as it projects from the surface 54 toward the vehicle body panel P. The projection end edge 58 of the eaves portion 56 on the vehicle body panel P side is projected toward the vehicle body panel P further than the box body 12 and is projected toward the vehicle body panel P further than the large-size relay 28 mounted on the large-size relay mounting portion 22 of the box body 12. Also, as described above, since the water discharge hole 50 is formed at a position shifted from the vertically upward direction of the large-size relay mounting portion 22, the eaves portion 56 is formed at a position shifted from the vertically upward direction of the large-size relay mounting portion 22.

In the two end edges of the eaves portion 56 in the width direction (in Fig. 1, in the right and left direction), there are formed a pair of scattering prevention walls 60 and 60. The scattering prevention walls 60 and 60 project upwardly of the eaves portion 56 and extend over the whole length of the eaves portion 56 in a direction where they project from the surface 54 of the eaves portion 56. The scattering prevention walls 60 and 60 also project downwardly of the eaves portion 56. Therefore, the eaves portion 56 has a section of a substantially H-like shape including the scattering prevention walls 60 and 60, whereby its strength is secured.

The rear wall 42 of the water catch recess 40 includes a reinforcing rib 62 to be connected to the bottom surface 52. The reinforcing rib 62 is projected from above the water discharge hole 50 of the rear wall 42 inwardly of the water catch recess 40 and is connected to the bottom surface 52, while it is formed on the opening of the water discharge hole 50,.

The front wall 44 of the water catch recess 40 includes a clamp mounting portion 64. To form the clamp mounting portion 64, the front wall 44 may be projected inside the water catch recess 40 in a rectangular block shape. Thus, the front wall 44 has a rectangular-shaped storage space 66 which opens outside the upper bracket 14. The upper plate section 68 of the clamp mounting portion 64 has a clamp insertion hole 70 which penetrates therethrough. As can be clearly seen from Fig. 2, the upper end edge 72 of the front wall 44 is projected slightly upwardly of the upper plate section 68 to thereby prevent water having reached the upper plate section 68 from flowing out of the water catch recess 40.

Especially, in this embodiment, the reinforcing rib 62 is extended toward the front wall 44 and is connected to the clamp mounting portion 64. Thus, the water catch recess 40 is partitioned by the reinforcing rib 62 and clamp mounting portion 64 to be thereby divided into two divisional recesses 74a and 74b. And, since the reinforcing rib 62 is disposed on the water discharge hole 50 and the divisional recesses 74a, 74b use the same water discharge hole 50, there is eliminated the need to penetratingly form separate water discharge holes in the respective divisional recesses 74a, 7b, thereby securing the strength of the upper bracket 14.

Also, the side walls 46, 48 of the water catch recess 40 are extended upwardly up to the upper end edge 76 of the mounting portion 36. Thus, the side walls 46, 48 are formed in the width-direction (in Fig. 1, the right and left direction) two end edges of the mounting portion 36 over the whole length from the upper end edge 76 to the water catch recess 40.

The thus structured upper bracket 14 is connected to the box body 12 by a slide lock 78 provided in the lower end portion thereof. Thus, the upper bracket 14 is disposed on the top of the box body 12 and the mounting portion 36 is projected upwardly of the box body 12.

On the other hand, the lower bracket 16 is an integrally molded synthetic-resin member. The lower bracket 16 includes a bolt insertion hole 80 which penetrates therethrough. The lower bracket 16, substantially similarly to the upper bracket 14, is connected to the box body 12 by a slide lock 82 provided on the upper end thereof and is disposed on the bottom of the box body 12.

The thus structured electrical connection box 12, as shown in Fig. 2, is put on the vehicle room side of the vehicle body panel P, and then bolts (not shown) are inserted into the bolt insertion hole 38 of the mounting portion 36 of the upper bracket 14 and the bolt insertion hole 80 of the lower bracket 16 to be thereby threadedly engaged with the vehicle body panel P. Thus, the box body 12 is fixed to the vehicle body panel P through the upper bracket 14 and lower bracket 16. In a state where the electrical connection box 10 is mounted on the vehicle body panel P, the upper bracket 14 exists vertically upward and the lower bracket 16 exists vertically downward, while the water catch recess 40 of the upper bracket 14 is open vertically upward. Also, the water discharge hole 50 of the water catch recess 40 is open on the vehicle body panel P side and the eaves portion 56 is projected toward the vehicle body panel P. Here, the mounting portion 36 is formed such that it becomes more distant from the vehicle body panel P as it goes downward from the upper end edge 76; the upper bracket 14 is structured such that only such upper end of the mounting portion 36 as having the insertion hole 38 can be contacted with the vehicle body panel P; and, the box body 12 is disposed apart from the vehicle body panel P and is thus not in contact therewith. Also, the projection end edge 58 of the eaves portion 56 is slightly spaced from the vehicle body panel P.

The insertion portion 86 of a clamp 84 holding a wire harness W/H is inserted through a clamp insertion hole 70 into the storage space 66 of the clamp mounting portion 64 of the upper bracket 14 and is engaged by the upper plate section 68. This enables the wire harness W/H to be fixed to the upper bracket 14.

In the electrical connection box 10 having a structure according to this embodiment, when water flows into the vehicle body due to rain, high-pressure cleaning or the like and flows on the vehicle body panel P, as shown by an arrow line in Fig. 2, the water flowing on the vehicle body panel P firstly reaches the upper end edge 76 of the mounting portion 36 in contact with the vehicle body panel P. Here, since the two width-direction end edges of the mounting portion 36 are surrounded by the side walls 46, 48, the water after reaching the mounting portion 36 flows downward along the mounting portion 36 without scattering round from the mounting portion 36 and is caught by the water catch recess 40. The water caught by the water catch recess 40 is discharged through the discharge hole 50 from the upper bracket 14 toward the vehicle body panel P. In this manner, according to this embodiment, since the water catch recess 40 catches the water having flowed to the upper bracket 14, the water can be prevented from flowing to the box body 12, whereby the box body 12 can be prevented from being touched by the water.

Further, since the water discharge hole 50 includes the eaves portion 56, the drop position of the water discharged from the water discharge hole 50 can be kept away from the box body 12, thereby being able to prevent the box body 12 from being touched by the water effectively. Especially, in this embodiment, since the position of the eaves portion 56 is shifted from the vertically upward direction of the large-size relay 28 having a large projection dimension from the box body 12, the water after dropping from the eaves portion 56 can be further effectively prevented from touching electrical parts such as the large-size relay 28 mounted on the box body 12. Further, since the eaves portion 56 includes the scattering prevention walls 60, 60 on both sides in the width direction, the water discharged from the water discharge hole 50 can be guided to the projection end edge 58 of the eaves portion 56 more positively. Thus, the drop position of water from the eaves portion 56 can be kept away from the box body 12 more positively and also water can be discharged toward the vehicle body panel P side more positively.

Additionally, the water discharge hole 50 and eaves portion 56 are arranged to face the vehicle body panel P. This enables water discharged from the water discharge hole 50 to flow to the vehicle body panel P, thereby being able to reduce a fear that water having dropped from the eaves portion 56 can scatter round in the air and thus touch the box body 12 again.

Moreover, the front wall 44 of the water catch recess 40 includes the clamp mounting portion 64. The clamp mounting portion 64 needs to secure the height dimension of the storage space 66 for storing the insertion portion 86 of the clamp 84. Thus, by using the height dimension of the front wall section 44 well, the clamp mounting portion 64 can be formed within the water catch recess 40 with high space efficiency.

Since the reinforcing rib 62 is formed on the water discharge hole 50, the strength of the forming portion of the water discharge hole 50 in the upper bracket 14 is secured. Especially, since the reinforcing rib 62 is connected to the clamp mounting portion 64 to thereby connect the rear and front walls 42 and 44 to each other, the strength of the upper bracket 14 is secured at a higher level. In addition, while the reinforcing rib 62 is connected to the clamp mounting portion 64 to thereby divide the water catch recess 40 into the two divisional recesses 74a and 74b, provision of the reinforcing rib 62 on the water discharge hole 50 enables the two divisional recesses 74a and 74b to use one water discharge hole 50 in common. This eliminates the need for penetrating formation of water discharge holes respectively in the two divisional recesses 74a and 74b, thereby being able to secure the strength of the upper bracket 14.

Although description has been given heretofore specifically of the embodiment of the invention, the invention is not limited to the specific description thereof. For example, the number of mounting portions and water catch recesses to be formed in the bracket is not limitative but multiple mounting portions and water catch recesses may also be formed. Also, means for mounting the mounting portions onto the vehicle body panel is naturally not limited to the means using bolts but, for example, there may be used means which is inserted into the vehicle body panel for fixation. Further, the bracket may also be formed integrally with the box body.

Also, the clamp mounting portion may also be formed in any one of the wall portions of the water catch recess, for example, it may be formed in the side walls 46, 48 or rear wall 42 of the water catch recess 40. However, the clamp mounting portion is not always necessary. In addition, the reinforcing rib is not always necessary, either; and, the reinforcing rib may not be extended from the rear wall of the water catch recess to its opposed wall as in the above embodiment. For example, of course, the reinforcing rib 62 of the above embodiment may also be formed such that it is not extended to the clamp mounting portion 64 nor does it divide the water catch recess 40 into the two divisional recesses 74a, 74b.

Further, the electrical connection box 10 disclosed in the above embodiment is disposed on the vehicle room side of the vehicle body panel P which partitions the engine room and vehicle room from each other. However, the electrical connection box of the invention may also be provided outside the vehicle room, for example, within the engine room.

## Claims

1. An electrical connection box comprising:
a box body to be fixed to a vehicle body panel;
a bracket provided above the box body, including:
a mounting portion extending upwardly from the bracket, the mounting portion configured to mount the box body onto the vehicle body panel;
a water catch recess surrounded by walls in all directions and opened vertically upward, the water catch recess provided on a base end portion of the mounting portion;
a water discharge hole formed with a rear wall of the walls, the rear wall being situated on a side corresponding to the vehicle body panel and being extended upward to form the mounting portion; and
an eaves portion projecting from the water discharge hole toward the vehicle body panel continuously with the bottom surface of the water catch recess, the eaves portion being provided on a side surface of the bracket, which is corresponding to the vehicle body panel, and the eaves portion being situated nearer to the vehicle body panel than the box body.

2. The electrical connection box according to Claim 1, further comprising
a reinforcing rib provided on the water discharge hole, the reinforcing rib connecting the rear wall and the bottom surface of the water catch recess.

3. The electrical connection box according to Claim 1 or 2, further comprising
a clamp mounting portion defined by the walls.

4. The electrical connection box according to any one of Claims 1 to 3, further comprising
scattering prevention walls each of which provided on end edges of the eaves portion with respect to the width direction, the scattering prevention walls extending over a whole length of the eaves portion in the projecting direction of the eaves portion.

5. The electrical connection box according to any one of Claims 1 to 4, wherein
a pair of side walls of the walls connected to the rear wall are extended to an upper end edge of the mounting portion.

6. The electrical connection box according to any one of Claims 1 to 5, further comprising:
a short part mounting portion provided on the side surface of the box body, the short part mounting portion configured to mount a short part having a relatively small dimension of projection from the box body; and
a tall part mounting portion provided on the side surface of the box body, the tall part mounting portion configured to mount a tall part having a relatively large dimension of projection from the box body, wherein
the eaves portion is disposed shifted at least from a vertically upward direction of the tall part mounting portion in a case that the box body is mounted on the vehicle body panel.
